# EUROPEAN PATENT SPECIFICATION

(11) **EP 1 679 235 B1**
(45) Date of publication and mention of the grant of the patent: **26.08.2015**
(21) Application number: 04793024.3
(22) Date of filing: 27.10.2004
(51) Int. Cl.: B60R 21/232, B60R 21/233, B60R 21/2338

(54) **SIDE CURTAIN AIR BAG**
SEITENAIRBAG
COUSSINET GONFLABLE DE PROTECTION SOUS FORME DE RIDEAU LATERAL

(30) Priority: 27.10.2003 JP 2003366237
(43) Date of publication of application: 12.07.2006
(73) Proprietor: Autoliv Development AB, 447 83 Vårgårda (SE)
(72) Inventor: FUKUDA, Masataka, c/o AUTOLIV JAPAN LTD., Niihari-gun, Ibaraki 3150056 (JP); MAKIOKA, Takayuki, c/o AUTOLIV JAPAN LTD., Niihari-gun, Ibaraki 3150056 (JP); HIGANO, Makoto, c/o AUTOLIV JAPAN LTD., Niihari-gun, Ibaraki 3150056 (JP)
(74) Representative: Beattie, Alex Thomas Stewart
(86) International application number: PCT/JP2004/015912
(87) International publication number: WO 2005/039938

(56) References cited:
- EP-A2- 1 228 930
- WO-A-00/07854
- GB-A- 2 327 066
- JP-A- 2000 052 908
- JP-A- 2000 355 261
- JP-A- 2002 114 125
- JP-A- 2002 522 287
- JP-A- 2002 542 093
- JP-A- 2003 320 920
- US-A- 6 010 149
- US-B1- 6 203 058
- US-B1- 6 276 712
- US-B1- 6 290 253

## Description

### Technical Field

The present invention relates to a side curtain air bag which is designed to protect a head of an occupant inside the vehicle by being expanded and developed during lateral collisions or turnover accidents, and to prevent the occupant from being thrown out of a vehicle.

### Background Art

The related art side curtain air bags (hereinafter, simply referred to as an air bag) can be seen in reference documents.
Patent Document 1: JP-A-2001-270413
Patent Document 2: JP-A-2001-233155
Patent Document 3: JP-A-2001-328503
Patent Document 4: JP-A-2002-283949
Patent Document 5: JP-T-2002-503581

WO 00/07854 discloses a side restraint assembly comprising an air bag provided with a stiffening device.

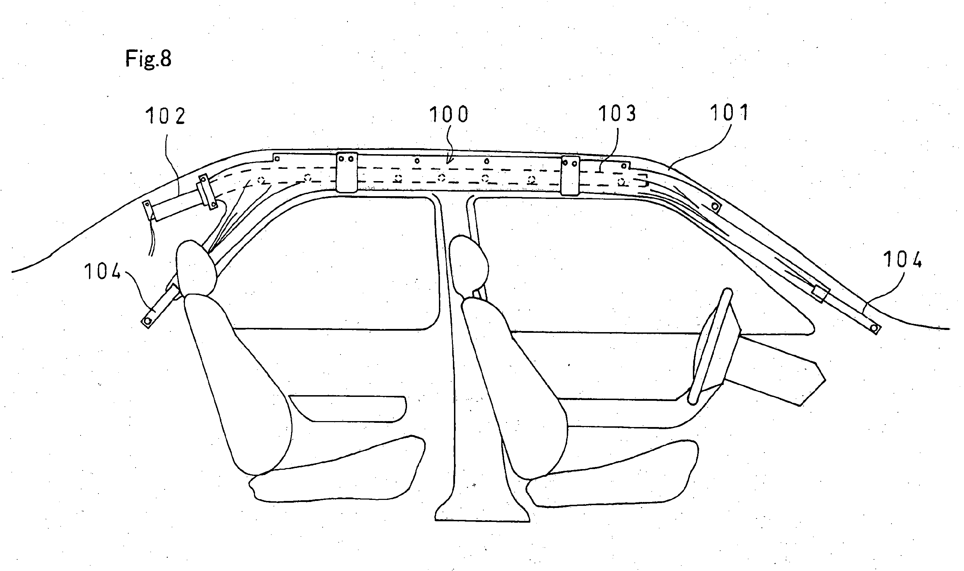

A side curtain air bag module 100, as shown in Fig. 8, is attached along a roof side rail 101 inside a vehicle.

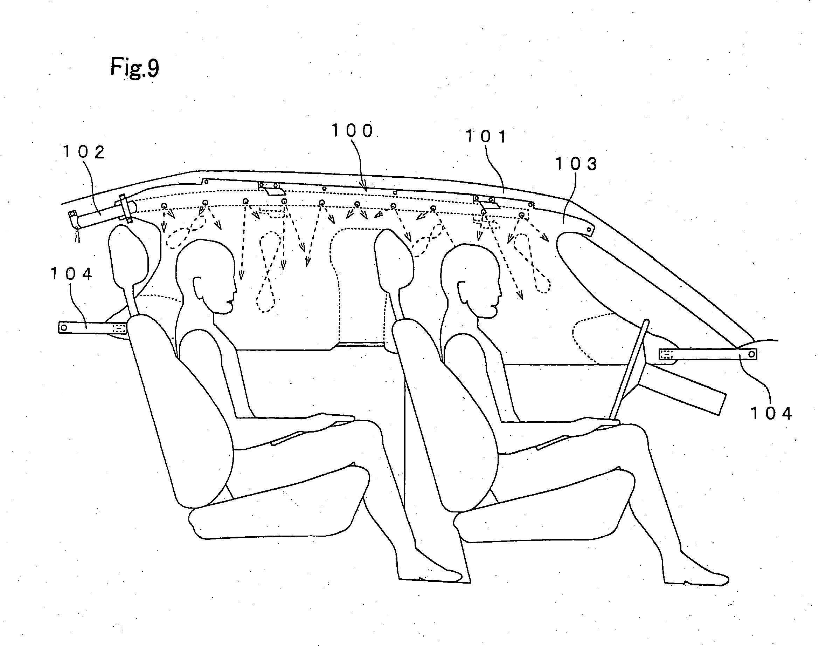

At the time of collision, as shown in Fig. 9, an air bag 103 included in the side curtain air bag module 100 expands and develops in a curtain shape between an occupant and a side component in a vehicle, such as a door, by gas supplied from an inflator 102, so as to protect the occupant from the side component.

The air bag 103 starts to expand and develop at the initial stage of the collision and comes into contact with the head of the occupant, on the purpose of protection. Therefore, when the air bag expands and develops, if expansive force of the entire air bag 103 is excessively strong thus making the air bag 103 be too hard, the expansive force may harm the occupant. Accordingly, the expansive force of the entire air bag is preferred to be relatively low and soft at the initial stage of the collision, that is, when the air bag expands and develops.

In the meantime, at the latter stage of the collision, in order to prevent an occupant from being thrown out of a vehicle due to overturn of the vehicle, after a predetermined time from the collision, that is, after the air bag 103 is developed, the air bag 103 needs to have a relatively high tension so as to maintain a position of being expanded in the fullest forward and backward direction in a curtain shape, because it is necessary to prevent the occupant from being thrown out of the vehicle. For this reason, a string 104 is attached to the leading and trailing sides below the air bag 103 to keep the air bag 103 in the expanded position. One end of the string 104 is attached to the air bag 103, and the other end thereof is attached to a chassis.

### Disclosure of the invention

### Problems to be solved by the invention

However, in the related art air bag 103, when a strong tension is needed after the air bag expands and develops, the tension is set to be high by the string 104 from the time when the air bag starts to develop. Therefore, it is difficult to control the tension of the air bag to be low when the air bag starts to expand and develop, and to be high when the air bag is developed. It is an object of the invention to provide an air bag which is capable of controlling the tension of the air bag properly and easily.

GB2327066A discloses an air-bag for a motor vehicle, comprising an inflatable element adapted to be mounted in position in or adjacent the roof of the vehicle extending along the side of the vehicle so that the inflatable element, when inflated, forms a curtain located between the occupant of the vehicle and the side of the vehicle, the inflatable element comprising a gas duct extending axially of the element and a plurality of inflatable cells extending transversely of the element, part of the inflatable element being formed by two intersecting chambers which communicate with the gas flow duct which are of a substantially "X" configuration extending substantially from the gas flow duct to the lower edge of the inflatable element. The chambers serve the function of applying tension to the lower edge of the inflatable element as it is inflated.

US6010149A discloses an air-bag arrangement for a motor vehicle, the air-bag arrangement including an air-bag adapted to be inflated, in the event that an accident should arise, to form a curtain, the air-bag having a fixation strap extending between the curtain and an anchor point, the fixation strap including inflatable means to shorten the effective length of the fixation strap upon inflation.

EP1228930A2 discloses an air bag for a head protection air bag system which includes an air bag main body and an inner tube disposed along an upper edge side within the air bag main body. The inner tube has supply ports which are made to open on a lower side of a circumferential wall thereof for supplying the inflating gas into the air bag main body, and the supply ports are disposed in such a manner as to be made to open downwardly at a substantially transverse center of the folded air bag main body when the air bag main body has been folded up. At least the supply port of the inner tube disposed in the vicinity of the inflator is offset closer to the inflator side than the transverse center of an inlet port portion communicating with the supply port. The opening areas of at least one of said supply ports of said inner tube is wider than the opening areas of at least one of said supply ports which are located nearer to a gas discharge port of said inflator and, at least one of said supply ports which are located nearer to the distal end portion of said inner tube.

### Means for solving the problems

According to a first aspect of the invention, there is provided a side curtain air bag which has chambers expanded by gas supplied from an inflator, and expands and develops in a curtain shape at side part of a vehicle so as to protect occupants.

There is provided a side curtain air bag, which has chambers expanded by gas supplied from an inflator, and expands and develops in a curtain shape at side part of a vehicle so as to protect occupants, the side curtain air bag comprising a primary chamber which expands so as to protect an occupant, secondary chambers which apply tension on the side curtain air bag after the side curtain air bag is expanded and developed, a front non-inflation part, a rear non-inflation part with an extension protrusion extending therefrom, an intermediate non-inflation part, and a set of strings, each having one end attached to the side curtain air bag at respective first and second attachment parts and the other end attached to a vehicle at a fixation end, in the forward and backward direction of the vehicle, wherein the first attachment part is disposed at the front non-inflation part and the second attachment part is disposed at the extension protrusion, the primary chamber has a first opening which communicates with the gas supply passage, and is expanded by the inflow of gas from the inflator, a first secondary chamber has a second opening through which gas is supplied from the inflator, and is expanded by the inflow of gas from the gas supply passage or from the primary chamber, a second secondary chamber has a third opening through which gas is supplied via the primary chamber from the inflator, a third secondary chamber has a fourth opening through which gas is supplied via the primary chamber from the inflator, when the side curtain air bag is expanded and developed, the primary and secondary chambers are disposed such that a portion or all of the secondary chambers and a portion of the primary chamber overlaps a virtual band region which inclinedly crosses the air-bag in a direction from the first attachment part upward toward the second attachment part, wherein the virtual band region is formed of a first virtual line connecting the respective fixation ends of the one set of strings and a second virtual line connecting the respective upper and/or lower ends of the first and second attachment parts of the one set of strings, or is formed of a first virtual line connecting an upper end of the first attachment part and an upper end of the second attachment part and a second virtual line connecting a lower end of the first attachment part and a lower end of the second attachment part, or is formed of a first, virtual line connecting the upper end of the first attachment part with the fixation end of a backwardly extending string and a second virtual line connecting the lower end of the first attachment part and the lower end of the second attachment part; and the first secondary chamber is disposed in front of or behind an inflation part of the primary chamber, in a row in the forward and backward direction of the vehicle, the second and third secondary chambers are disposed within the intermediate non-inflation part, and the sizes of the second, third and fourth apertures are chosen so that the time required for each of the secondary chambers to inflate is different, to control the tension applied to the air-bag.

Preferably, the second opening is smaller in size than the first opening so that the first secondary chamber expands later than the primary chamber.

Conveniently, at an initial stage of collision, the primary chamber is expanded and developed, at a latter stage of the collision, the gas is continuously supplied to the secondary chambers through the second openings with the result that the secondary chambers are expanded, and at the latter stage of the collision, the secondary chambers are expanded and developed so that the internal pressure of the primary chamber becomes identical with the internal pressure of the secondary chambers.

Advantageously, the initial stage of the collision has a time duration from 0 to 100 milliseconds after the collision is detected, and the latter stage of the collision has a time duration from 4 to 6 seconds after the collision is detected.

There is also provided a method of forming a side curtain air-bag having chambers expanded by gas supplied from an inflator, the air-bag configured to expand and develop in a curtain shape at a side part of a vehicle so as to protect occupants of the vehicle, the method comprising the steps of providing a primary chamber which expands so as to protect an occupant, the primary chamber having a first opening through which gas is supplied from the inflator, such that the primary chamber is expanded by the inflow of gas, providing secondary chambers which apply tension to the side curtain air-bag when the side curtain air-bag is expanded and developed, a first secondary chamber having a second opening through which gas is supplied via a gas supply passage from an inflator, such that the first secondary chamber is expanded by the inflow of gas, a second secondary chamber having a third opening through which gas is supplied via a the primary chamber from the inflator, such that the second secondary chamber is expanded by the inflow of gas, and a third secondary chamber having a fourth opening through which gas is supplied via the primary chamber from the inflator, such that the third secondary chamber is expanded by the inflow of gas, providing a front non-inflation part, providing a rear non-inflation part having an extension protrusion extending therefrom; providing an intermediate non-inflation part, providing a set of strings, each having one end attached to the side curtain air bag at respective first and second attachment parts and the other end attached to a vehicle at a fixation end, in the forward and backward direction of the vehicle, disposing the first attachment part at the front non-inflation part and the second attachment part at the extension protrusion, configuring the air-bag such that when the side curtain air bag is expanded and developed, the primary and secondary chambers are disposed such that a portion of or all of the secondary chambers and a portion of the primary chamber overlap a virtual band region which inclinedly crosses the air-bag in a direction from the first attachment part upward toward the second attachment part, wherein the virtual band region is formed of a first virtual line connecting the respective fixation ends of the one set of strings and a second virtual line connecting the respective first and/or second attachment parts of the one set of strings, or is formed of a first virtual line connecting an upper end of the first attachment part and an upper end of the second attachment part and a second virtual line connecting a lower end of the first attachment part and a lower end of the second attachment part, or is formed of a first virtual line connecting the upper end of the first attachment part with the fixation end of a backwardly extending string and a second virtual line connecting the lower end of the first attachment part and the lower end of the second attachment part, disposing the first secondary chamber in front of or behind an inflation part of the primary chamber, in a row in the forward and backward direction of the vehicle, disposing the second and third secondary chambers within the intermediate non-inflation part, and choosing the sizes of the second, third and fourth apertures so that the time required for each of the secondary chambers to inflate is different, to control the tension applied to the air-bag..

### Effects of the invention

The air bag according to the invention may include a primary chamber which expands to develop the air bag; a secondary chamber which applies an additional tension on the developed air bag, and the secondary chamber gradually expands later than the primary chamber is expanded. Therefore, it is possible to gradually increase the tension of the entire air bag. Accordingly, it is easy to properly control the tension of the air bag.

As a result, at the initial stage of the collision, the air bag protects the head of occupants while maintaining relatively low tension of the entire air bag so as to be soft, and sequentially, at the latter stage of the collision, the air bag prevents the occupants from being thrown out of the vehicle by turnover accidents while maintaining relatively high tension of the air bag so as to be developed to the fullest.

Further, the secondary chamber may be disposed such that a portion or the entire secondary chamber overlaps a virtual band region. The virtual band region may be formed of a first virtual line connecting the respective fixation ends of the one set of strings and a second virtual line connecting the respective joint ends of the one set of strings, the virtual band region may be formed of a first virtual line connecting respective upper ends of attachment parts of the one set of strings and a second virtual line connecting respective lower ends of the attachment parts of the one set of strings, and the virtual band region may be formed of a first virtual line connecting the upper end of the attachment part of one string and the fixation end of the other string, and a second virtual line connecting respective lower ends of the attachment parts of the one set of strings. Therefore, the tension created by the expansion of the secondary chamber, after the primary chamber is expanded and developed, is applied on the primary chamber through the respective virtual band regions. As a result, it is possible to prevent the occupants from being thrown out of the vehicle by turnover accidents or the like while maintaining high tension of the entire air-bag.

### Best Mode for Carrying Out the Invention

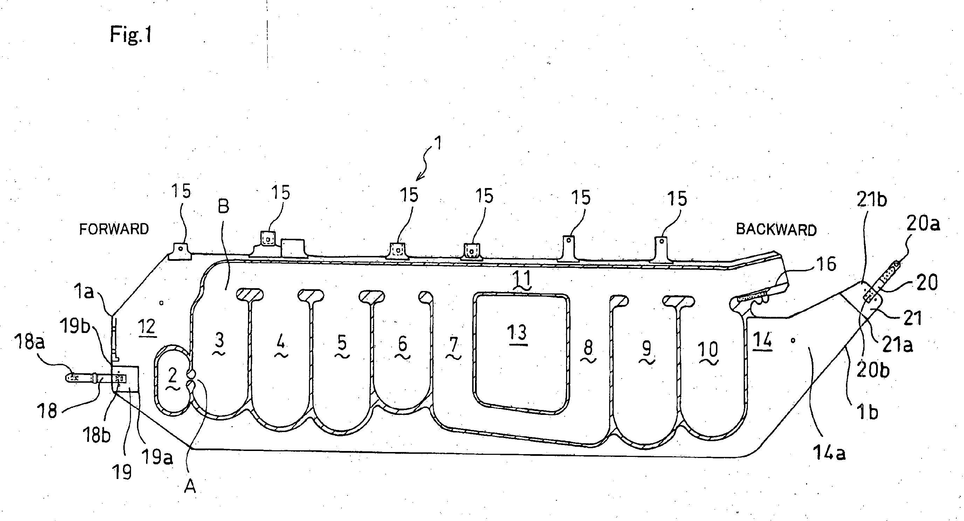

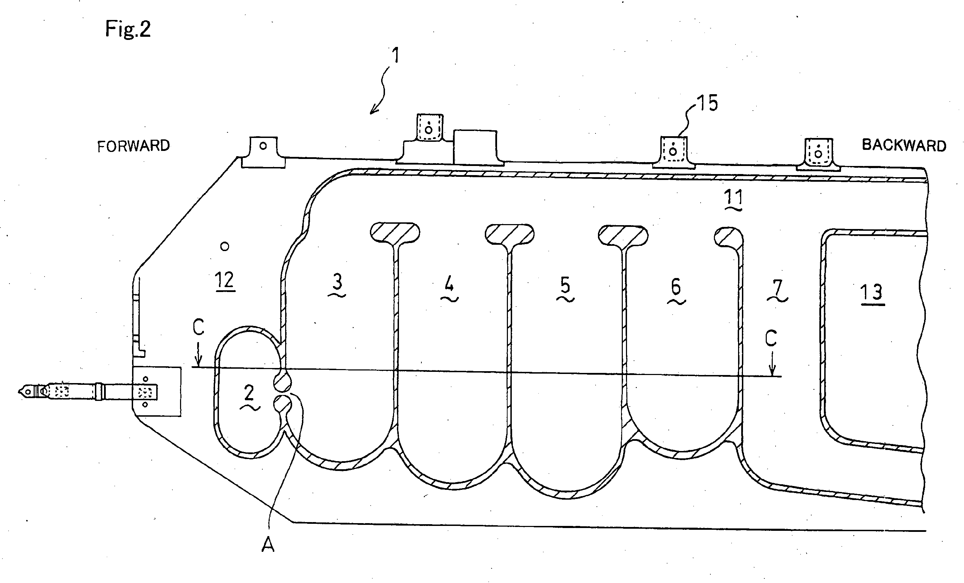

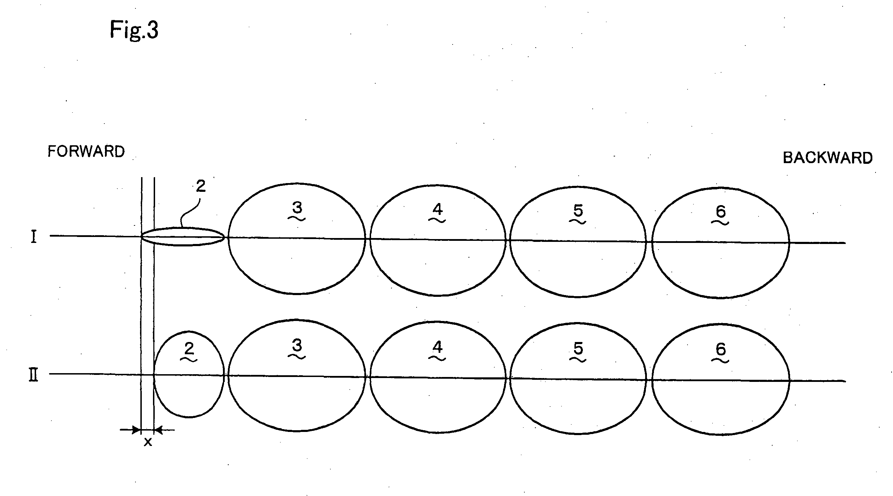

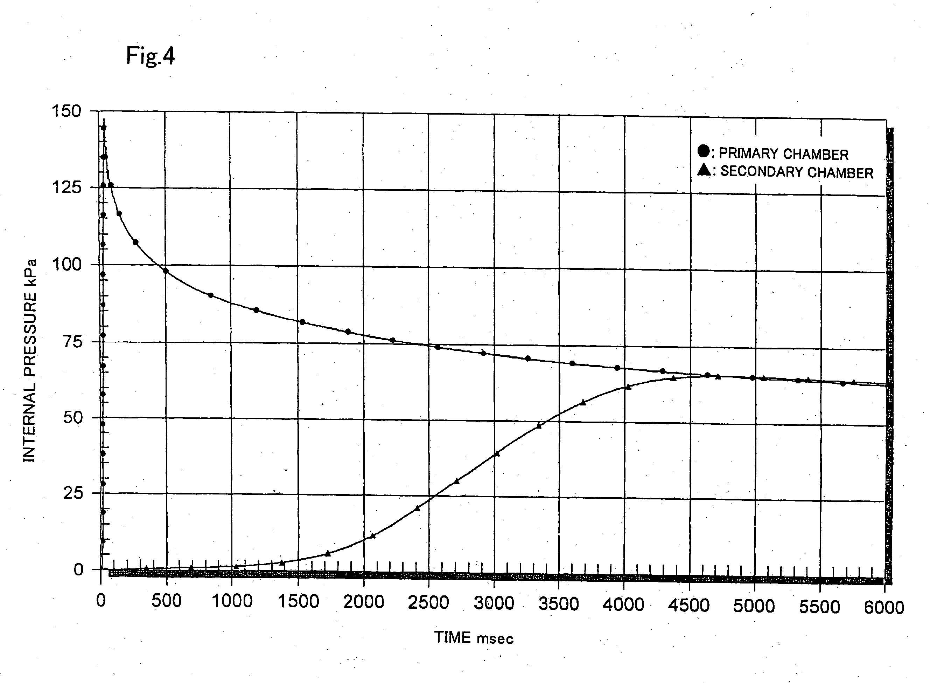

Hereinafter, an air bag 1 not embodying the invention will be described with reference to the accompanying drawings. Fig. 1 is a cross-sectional view showing the entire air bag 1. Fig. 2 is an enlarged view of main parts of the air bag. Fig. 3 is a cross-sectional view of the air bag 1 taken along the line C-C of Fig. 2. Fig. 4 is a graph showing the internal pressure change of primary and secondary chambers 3 and 2.

Further, forward, backward, left, and right directions are directions in which the air bag attached to the inside of a vehicle expands and develops in a curtain shape.

The air bag 1 of the first example is a pouch-shaped air bag formed by integrally superimposing a sheet material having the section shown in Fig. 1 upon another sheet material having a section that is axisymmetrical to the section shown in Fig. 1.

The air bag 1 may be formed of two sheets of texture, such as textile that is woven into a predetermined pouch-shape; otherwise, may be formed of one sheet of textile that is initially woven into a pouch-shape.

As shown in Fig. 1, the air bag 1 is provided with a plurality of front seat inflation parts 3, 4, 5, 6, and 7; a plurality of back seat inflation parts 8, 9, and 10; a gas supply passage 11; a front non-inflation part 12; an intermediate non-inflation part 13; a back non-inflation part 14; a plurality of attachment pieces 15 toward a roof side rail; a gas supply port 16; and a secondary chamber 2.

The front seat inflation parts 3, 4, 5, 6, and 7 include a plurality of first, second, third, fourth, and fifth chambers 3, 4, 5, 6, and 7. The back seat inflation parts 8, 9, and 10 include a plurality of sixth, seventh, and eighth chambers 8, 9, and 10. The plurality of chambers 3, 4, 5, 6, 7, 8, 9, and 10 is expanded by gas that is supplied from an inflator at the time of initial collision, and functions as the primary chamber which causes the entire air bag to expand and develop.

The gas supply port 16 is disposed on an upper trailing end of the air bag 1. The gas supply passage 11 is disposed above the respective primary chambers 3, 4, 5, 6, 7, 8, 9, and 10 so as to supply gas to the respective primary chambers 3, 4, 5, 6, 7, 8, 9, and 10 from the gas supply port 16. The respective primary chambers 3, 4, 5, 6, 7, 8, 9, and 10 are all open to the gas supply passage 11.

The secondary chamber 2 is disposed in front of the first chamber 3 in a row in the forward and backward direction, and the first chamber 3 is disposed in the forefront position of the front seat inflation part. The forefront position actually involves in applying extra tension to the air bag 1 in the forward and backward direction, when the secondary chamber 2 is expanded later than the primary chambers 3, 4, 5, 6, 7, 8, 9, and 10.

The secondary chamber 2, as shown in Fig. 2, has an opening A communicating with the first chamber 3 of the primary chamber, gas of the inflator is supplied to the secondary chamber through the first chamber 3. The size of the opening A is smaller than that of an opening B of the first chamber 3 which communicates with the gas supply passage 11, and the secondary chamber 2 is expanded later than the primary chambers 3, 4, 5, 6, 7, 8, 9, and 10. By varying the aperture of the opening A, the time required for the secondary chamber 2 to expand can be controlled.

A leading end 1a of the air bag 1 has a joint end 18b of a string 18 sewn to an attachment part 19 that is disposed at the front non-inflation part 12, and the air bag is connected to the chassis as the other end of the string 18 is connected to a fixation end 18a that is fixed to the vehicle. Further, a trailing end 1b of the air bag 1 has a joint end 20b of a string 20 sewn to an attachment part 21 that is disposed at an extension protrusion 14a extending backward from the back non-inflation part 14, and the air bag is connected to the chassis as the other end of the string 20 is connected to a fixation end 20a that is fixed to the vehicle. Further, the attachment part 19 and the attachment part 21 may be made of metal that is unlikely deformable even when the air bag 1 expands. Otherwise, the attachment part 19 may be made of deformable materials which deform corresponding to the expansion of the air bag 1, such as an enforced part of an additional sewn product that is strongly sewn to the front non-inflation part 12 by a sewing machine. That is, the attachment parts 19 and 21 involve in the connection the air bag 1 to the chassis by the strings 18 and 20, when the air bag 1 expands and develops; and a strong tension is applied thereon, and thus the attachment part 19 partially needs strength so to bear with the tension. Further, lower ends 19a and 21a and upper ends 19b and 21b of the attachment parts 19 and 21 are attached parts indicating upper and lower ends of the enforced part.

Further, in this example, as for the positions of the attachment parts 19 and 21, a virtual line which connects the attachment part 19 and the attachment part 21 inclinedly crosses the air bag 1 in a direction from the attachment part 19 upward the attachment part 21. In addition, the fixation end 20a of the string 20, which is fixed to the chassis, is located above the attachment part 21, the fixation end 18a of the string 18, which is fixed to the chassis, is located substantially at the same height as the attachment part 19. A virtual line which connects these fixation ends 20a and 18a inclinedly crosses the air bag 1, as same as described above. However, various modifications of the attachment parts 19 and 21 and the fixation ends 20a and 18a are possible, according to kinds of vehicles and air bags.

In the air bag 1 with this constitution, when overturn of a vehicle or collision occurs, and gas of the inflator is supplied from the gas supply port 16, at the initial stage of the collision, all of the primary chamber 3, 4, 5, 6, 7, 8, 9, and 10 expand and develop the entire air bag 1.

At this time, since force that is applied on the entire air bag 1 to expand and develop the air bag 1 is continuously supplied to the secondary chamber 2 from the primary chamber 3 through the opening A, the primary chambers 3 to 10 are controlled to be applied with relatively low force, so that the air bag 1 protects the head of an occupant while the air bag 1 is softly expanding and developing. For this reason, the air bag 1 may protect the occupant without harm.

Next, when gas is sufficiently supplied to the secondary chamber 2 later than to the primary chambers, an additional tension is actually applied on the entire air bag 1, which is expanded and developed, in the forward and backward direction, so as to increase the tension applied on the entire air bag 1.

In this way, the air bag 1 with sufficiently high tension assuredly protects the occupant at the latter stage of the collision or at the time of the final overturn of the vehicle, thus reliably preventing the occupant from being thrown out of the vehicle. That is, at the time of collision or overturn of a vehicle, since the tension of the air bag is controlled corresponding to each time, the occupant is not harmed and is reliably prevented from being thrown out of the vehicle.

The state of tension applied on the air bag 1 due to the expansion of the secondary chamber 2 will be described with reference to Fig. 3. Fig. 3 is a cross-sectional view of the air bag 1 taken along the line C-C of Fig. 2. Reference symbol I indicates the initial stage of the collision, that is, a stage when the primary chambers 3, 4, 5, 6, 7, 8, 9, and 10 are completely expanded and the air bag 1 is completely developed after 0 to 100 mSec elapses from the time of detecting collision. II indicates the latter stage of the collision, that is, a stage when the secondary chamber 2 is completely expanded later than the primary chambers 3, 4, 5, 6, 7, 8, 9, and 10 after 4 to 6 Sec elapses from the time of detecting the collision. By the expansion of the secondary chamber 2, the air bag 1 shrinks in the forward and backward direction by a length x, and an additional tension is applied on the air bag 1 that is developed.

Fig. 4 is a graph showing the internal pressure change of the primary and secondary chambers 3 and 2 of Fig. 1. ● indicates the internal pressure of the primary chamber 3, ▲ indicates the internal pressure of the secondary chamber 2. The internal pressure of the secondary chamber 2 starts to increase after 1000 mSec from the time of initiating the development, that is, after 1 Sec, and becomes an identical pressure to that of the primary chamber 3 after 4500 mSec from the time of initiating the development. In this way, with the structure of the air bag 1 shown in Fig. 1, since the secondary chamber 2 gradually expands after the primary chambers 3, 4, 5, 6, 7, 8, 9, and'10 are expanded, it is possible to gradually increase the force for expanding the entire air bag 1.

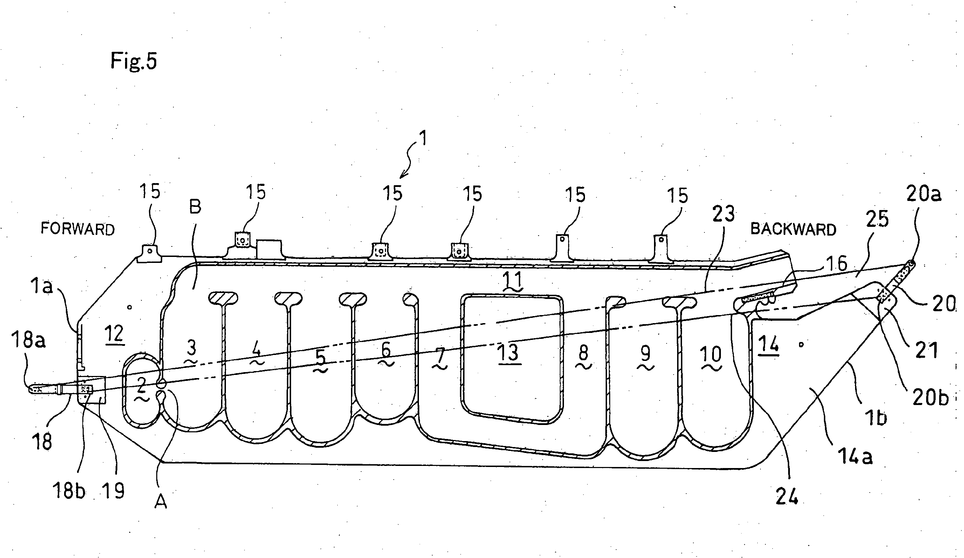

When the air bag 1 expands and develops, the relationship between the position of the secondary chamber 2 and the attachment parts 19 and 21 of the strings 18 and 19, and the fixation ends 18a and 20a of the strings 18 and 20 plays a major role in the function of the air bag 1, the relationship will be describe with reference to Figs. 5 to 7.

In Fig. 5, a virtual band region 25 is formed of a first virtual line 23 and a second virtual line 24, and the secondary chamber 2 overlaps the virtual band region 25. The first virtual line 23 connects the fixation end 18a, by which the string 18 is attached to the vehicle, and the fixation end 20a, by which the string 20 is attached to the vehicle. The second virtual line 24 connects the joint end 18b of the string 18 attached to the attachment part 19, and the joint end 20b of the string 20 attached to the attachment part 21. With this structure, as described above, when gas of the inflator is supplied to the air bag 1 so as to expand the air bag, and the secondary chamber 2 also starts to expand, tension is applied on the air bag 1 by the virtual band region 25; therefore, it is possible to more reliably prevent the occupant from being thrown out of the vehicle.

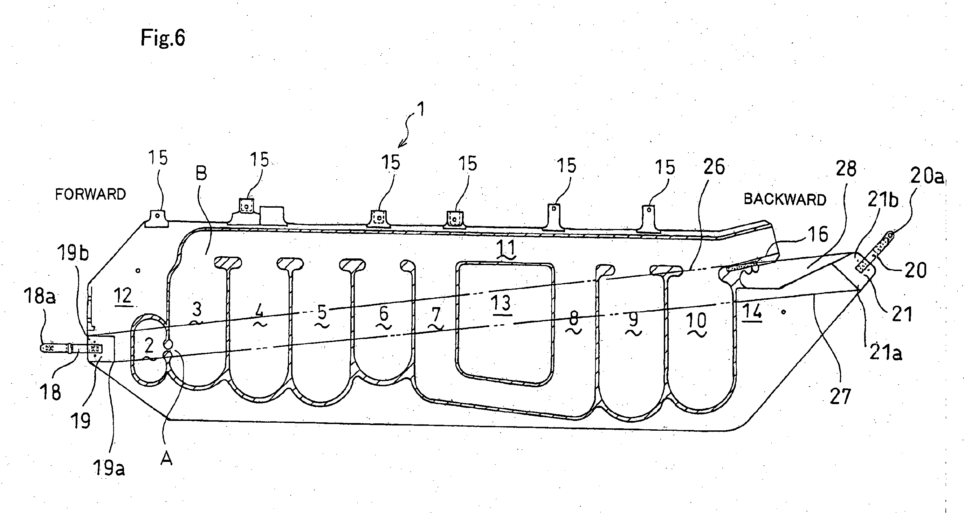

The structure of Fig. 6 is configured to achieve the same effect as that of Fig. 5. In Fig. 6, a virtual band region 28 is formed of a first virtual line 26 and a second virtual line 27, and the secondary chamber 2 is disposed to overlap with the virtual band region 28. The first virtual line 26 connects the upper end 19b of the attachment part 19, by which the string 18 is attached thereto, and the upper end 21 b of the attachment part 21, by which the string 20 is attached thereto. The second virtual line 27 connects the lower end 19a of the attachment part 19, by which the string 18 is attached thereto, and the lower end 21a of the attachment part 21, by which the string 20 is attached thereto. With this configuration, as described above, when gas of the inflator is supplied to the air bag 1 and thus the air bag 1 is expanded, and the secondary chamber 2 also starts to expand, tension is applied on the air bag 1 by the virtual band region 28; therefore, it is possible to more reliably prevent the occupant from being thrown out of the vehicle.

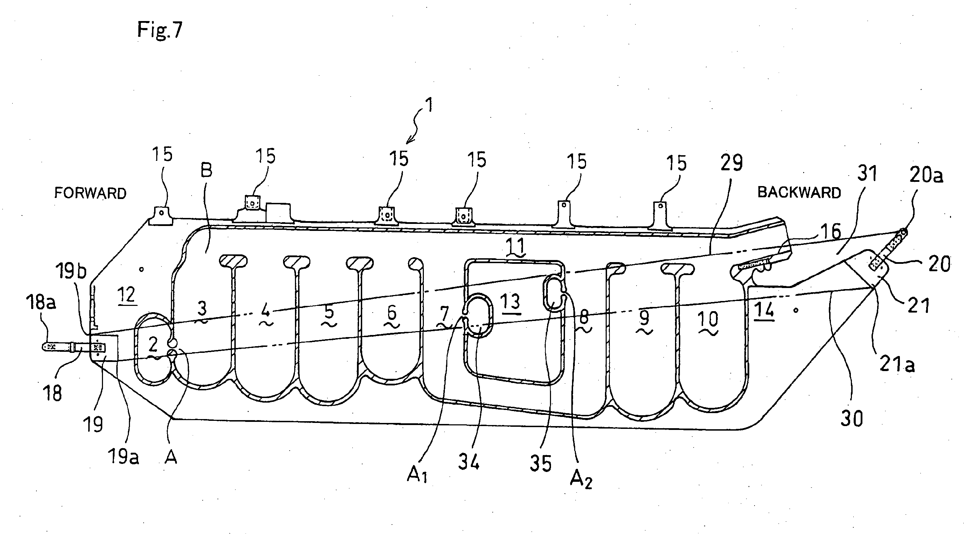

The structure of Fig. 7 is configured to achieve the same effect as that of Figs. 5 and 6. In Fig. 7, a virtual band region 31 is formed of a first virtual line 29 and a second virtual line 29 and a second virtual line 30, a plurality of secondary chambers 2, 34 and 35 is disposed to overlap with the virtual band region 31. The first virtual line 29 connects the upper end 19b of the attachment part 19 and the fixation end 20a of the string 20. The second virtual line 30 connects the lower end 19a of the attachment part 19 and the lower end 21a of the attachment part 21. With this configuration, as described above, when gas of the inflator is supplied to the air bag 1 so as to expand the air bag, and the plurality of secondary chambers 2, 34 and 35 also starts to expand, tension is applied on the air bag 1 by the virtual band region 31; therefore, it is possible to more reliably prevent the occupant from being thrown out of the vehicle.

In addition, the secondary chambers 34 and 35 are disposed in the non-inflation part 13. The secondary chamber 34 communicates with the primary chamber 7 through an opening A1, and the secondary chamber 35 communicates with the primary chamber 8 through an opening A2, and because of the openings A1 and A2, the respective primary chambers are slower to expand than the primary chambers.

In addition, as for the disposition of the secondary chambers 2, 34 and 35, the air bag 1 need not have all of them, and the tension on the air bag 1 can be controlled according to its functional purposes. For example, it is possible to make different each time that is required for the respective secondary chambers 2, 34 and 35 to expand and develop, and thus to control the tension applied on the air bag 1, by a configuration in which the secondary chamber 2 is omitted, or by another configuration in which a portion of the secondary chamber 24 overlaps the virtual band region 31 and the entire secondary chamber 35 overlaps the virtual band region 31, or by properly choosing the area of aperture of the openings A, A1 and A2 of the secondary chambers 2, 34 and 35. Therefore, it is possible to configure the air bag 1 which ensures occupant's protection.

Further, the location of the secondary chamber 2 is not limited to in front of the primary chamber 3. For example, the secondary chamber 2 may be located further behind the eighth chamber 10 that is located at the rearmost end of the back seat inflation part. In addition, it is unnecessary that gas be supplied to the secondary chamber 2 through the primary chamber. Gas may be supplied to the secondary chamber 2 from the gas supply port 16 through the gas supply passage 11.

In other words, modifications are allowed in the location and the number of the secondary chambers, and in the location and size of the opening for supplying gas to the secondary chamber as long as the secondary chamber expands later than the primary chamber and an additional tension is applied on the air bag that is developed.

Further, the number of the primary and secondary chambers need not be more than one, that is, the primary and secondary chamber may be one, respectively.

Furthermore, the invention has been described by way of the above-described embodiments, but the invention is not limited to the above-described embodiments. Various modifications and changes can be made without departing from the scope of the invention as defined by the appended claims.

### Industrial Applicability

According to the invention, by disposing a chamber that is expanded by a compressed gas and another chamber that expands later than the chamber in a row, the invention may be applied to release impact on the body and reliably absorb the impact.

### Brief Description of the Drawings

Fig. 1 is a cross-sectional view showing the entire air bag according to an example of the invention.
Fig. 2 is an enlarged view of main parts of the air bag according to the example of the invention.
Fig. 3 is a cross-sectional view of the air bag 1 taken along the line C-C of Fig. 2.
Fig. 4 is a graph showing the internal pressure change of primary and secondary chambers 3 and 2 according to the example of the invention.
Fig. 5 is a view showing the relationship of a virtual band region and the secondary chamber.
Fig. 6 is a view showing the relationship of a virtual band region and the secondary chamber.
Fig. 7 is a view showing the relationship of a virtual band region and the secondary chamber.
Fig. 8 is a view showing a side curtain air bag module according to the related art.
Fig. 9 is an explanatory view showing an operation of a side curtain air bag module according to the related art.

### Reference Numerals

1 side curtain air bag
2, 34, 35 secondary chamber
3, 4, 5, 6, 7, 8, 9, 10 primary chamber
A, A1, A2 opening
18, 20 string
19, 21 attachment part
18a, 20a fixation end
19a, 21a upper end
19b, 21b lower end
23, 26, 29 first virtual line
24, 27, 30 second virtual line
15, 28, 31 virtual band region

## Claims

1. A side curtain air bag (1), which has chambers (2-10, 34, 35) expanded by gas supplied from an inflator, and expands and develops in a curtain shape at side part of a vehicle so as to protect occupants, the side curtain air bag (1) comprising:
a primary chamber (3-10) which expands so as to protect an occupant;
secondary chambers (2, 34, 35) which apply tension on the side curtain air bag (1) after the side curtain air bag (1) is expanded and developed;
a front non-inflation part (12);
a rear non-inflation part (14) with an extension protrusion (14a) extending therefrom;
an intermediate non-inflation part (13); and
a set of strings (18, 20), each having one end attached to the side curtain air bag (1) at respective first and second attachment parts (19, 21) and the other end attached to a vehicle at a fixation end (18, 20), in the forward and backward direction of the vehicle,
wherein:
the first attachment part (19) is disposed at the front non-inflation part (12) and the second attachment part (21) is disposed at the extension protrusion (14a);
the primary chamber (3-10) has a first opening (B) which communicates with the gas supply passage (11), and is expanded by the inflow of gas from the inflator;
a first secondary chamber (2) has a second opening (A) through which gas is supplied from the inflator, and is expanded by the inflow of gas from the gas supply passage (11) or from the primary chamber (3-10);
a second secondary chamber (34) has a third opening (A1) through which gas is supplied via the primary chamber (3, 10) from the inflator;
a third secondary chamber (35) has a fourth opening (A2) through which gas is supplied via the primary chamber (3, 10) from the inflator;
when the side curtain air bag (1) is expanded and developed, the primary and secondary chambers (2-10, 34, 35) are disposed such that a portion or all of the secondary chambers (2, 34, 35) and a portion of the primary chamber (3-10) overlaps a virtual band region (25, 28, 31) which inclinedly crosses the air-bag (1) in a direction from the first attachment part (19) upward toward the second attachment part (21), wherein the virtual band region (25, 28, 31) is formed of:
a first virtual line (23) connecting the respective fixation ends (18a, 20a) of the one set of strings (18, 20) and a second virtual line (24) connecting the respective upper and/or lower ends of the first and second attachment parts (19, 21) of the one set of strings (18, 20),
or is formed of a first virtual line (26) connecting an upper end (19b) of the first attachment part (19) and an upper end (21 b) of the second attachment part (21) and a second virtual line (27) connecting a lower end (19a) of the first attachment part (19) and a lower end (21 a) of the second attachment part (21),
or is formed of a first virtual line (29) connecting the upper end (19b) of the first attachment part (19) with the fixation end (20a) of a backwardly extending string (20) and a second virtual line (30) connecting the lower end (19a) of the first attachment part (19) and the lower end (21 a) of the second attachment part (21); and
the first secondary chamber (2) is disposed in front of or behind an inflation part of the primary chamber (3-10), in a row in the forward and backward direction of the vehicle;
the second and third secondary chambers (34, 35) are disposed within the intermediate non-inflation part (13); and
the sizes of the second, third and fourth apertures (A, A1, A2) are chosen so that the time required for each of the secondary chambers (2, 34, 35) to inflate is different, to control the tension applied to the air-bag (1).

2. The side curtain air bag (1) according to claim 1, wherein the second opening (A) is smaller in size than the first opening (B) so that the first secondary chamber (2) expands later than the primary chamber (3-10).

3. The side curtain air bag (1) according to any one of claim 1 or 2, wherein
at an initial stage of collision, the primary chamber (3-10) is expanded and developed, at a latter stage of the collision, the gas is continuously supplied to the secondary chambers (2, 34, 35) through the second openings (A, A1, A2), with the result that the secondary chambers (2, 34, 35) are expanded, and
at the latter stage of the collision, the secondary chambers (2, 34, 35) are expanded and developed so that the internal pressure of the primary chamber (3-10) becomes identical with the internal pressure of the secondary chambers (2, 34, 35).

4. The side curtain air bag (1) according to claim 3, wherein:
the initial stage of the collision has a time duration from 0 to 100 milliseconds after the collision is detected, and
the latter stage of the collision has a time duration from 4 to 6 seconds after the collision is detected.

5. A method of forming a side curtain air-bag having chambers (2-10, 24, 25) expanded by gas supplied from an inflator, the air-bag configured to expand and develop in a curtain shape at a side part of a vehicle so as to protect occupants of the vehicle, the method comprising the steps of:
providing a primary chamber (3-10) which expands so as to protect an occupant, the primary chamber (3-10) having a first opening (B) through which gas is supplied from the inflator, such that the primary chamber (3-10), is expanded by the inflow of gas;
providing secondary chambers (2, 34, 35) which apply tension to the side curtain air-bag (1) when the side curtain air-bag (1) is expanded and developed, a first secondary chamber (2) having a second opening (A) through which gas is supplied via a gas supply passage (11) from the inflator, such that the first secondary chamber (2) is expanded by the inflow of gas, a second secondary chamber (34) having a third opening (A1) through which gas is supplied via the primary chamber from the inflator, such that the second secondary chamber (34) is expanded by the inflow of gas, and a third secondar chamber (35) having a fourth opening (A2) through which gas is supplied via the primary chamber from the inflator, such that the third secondary chamber (35) is expanded by the inflow of gas;
providing a front non-inflation part (12);
providing a rear non-inflation part (14) having an extension protrusion (14a) extending therefrom;
providing an intermediate non-inflation part (13);
providing a set of strings (18, 20), each having one end attached to the side curtain air bag (1) at respective first and second attachment parts (19, 21) and the other end attached to a vehicle at a fixation end (18, 20), in the forward and backward direction of the vehicle;
disposing the first attachment part (19) at the front non-inflation part (12) and the second attachment part (21) at the extension protrusion (14a);
configuring the air-bag such that when the side curtain air bag (1) is expanded and developed, the primary and secondary chambers (2-10, 34, 35) are disposed such that a portion of or all of the secondary chambers (2, 34, 35) and a portion of the primary chamber (3-10) overlap a virtual band region (25, 28, 31) which inclinedly crosses the air-bag (1) in a direction from the first attachment part (19) upward toward the second attachment part (21), wherein the virtual band region (25, 28, 31) is formed of:
a first virtual line (23) connecting the respective fixation ends (18a, 20a) of the one set of strings (18, 20) and a second virtual line (24) connecting the respective first and/or second attachment parts (19, 21) of the one set of strings (18, 20),
or is formed of a first virtual line (26) connecting an upper end (19b) of the first attachment part (19) and an upper end (21 b) of the second attachment part (21) and a second virtual line (27) connecting a lower end (19a) of the first attachment part (19) and a lower end (21 a) of the second attachment part (21),
or is formed of a first virtual line (29) connecting the upper end (19b) of the first attachment part (19) with the fixation end (20a) of a backwardly extending string (20) and a second virtual line (30) connecting the lower end (19a) of the first attachment part (19) and the lower end (21a) of the second attachment part (21);
disposing the first secondary chamber (2) in front of or behind an inflation part of the primary chamber (3-10), in a row in the forward and backward direction of the vehicle;
disposing the second and third secondary chambers (34, 35) within the intermediate non-inflation part (13); and
choosing the sizes of the second, third and fourth apertures (A, A1, A2) so that the time required for each of the secondary chambers (2, 34, 35) to inflate is different, to control the tension applied to the air-bag (1).

## Patentansprüche

1. Seitenvorhangairbag (1), der Kammern (2 bis 10, 34, 35) aufweist, die von Gas ausgedehnt werden, das von einem Gasgenerator zugeleitet wird, und sich in Form eines Vorhangs an einem seitlichen Teil eines Fahrzeugs ausdehnt und ausbildet, damit Insassen geschützt werden, wobei der Seitenvorhangairbag (1) umfasst:
eine primäre Kammer (3 bis 10), die sich ausdehnt, damit ein Insasse geschützt wird;
sekundäre Kammern (2, 34, 35), die den Seitenvorhangairbag (1) auf Zug beanspruchen, nachdem der Seitenvorhangairbag (1) ausgedehnt und ausgebildet ist;
einen vorderen nicht füllbaren Teil (12);
einen hinteren nicht füllbaren Teil (14) mit einem Verlängerungsvorsprung (14a), der von dort aus verläuft;
ein nicht füllbares Zwischenteil (13); und
einen Satz Bänder (18, 20), von denen bei jedem ein Ende an dem Seitenvorhangairbag (1) an einem jeweiligen ersten und zweiten Befestigungsteil (19, 21) befestigt ist und das andere Ende an einem Fahrzeug an einem Befestigungsende (18, 20) in der Vorwärts- und Rückwärtsrichtung des Fahrzeugs befestigt ist,
wobei:
das erste Befestigungsteil (19) am vorderen nicht füllbaren Teil (12) angeordnet ist und das zweite Befestigungsteil (21) an dem Verlängerungsvorsprung (14a) angeordnet ist;
die primäre Kammer (3 bis 10) eine erste Öffnung (B) aufweist, die mit dem Gaszuleitungskanal (11) in Verbindung steht, und durch das Einströmen von Gas aus dem Gasgenerator ausgedehnt wird;
eine erste sekundäre Kammer (2) eine zweite Öffnung (A) aufweist, durch die Gas aus dem Gasgenerator zugeleitet wird, und durch das Einströmen von Gas aus dem Gaszuleitungskanal (11) oder aus der primären Kammer (3 bis 10) ausgedehnt wird;
eine zweite sekundäre Kammer (34) eine dritte Öffnung (A1) aufweist, durch die Gas aus dem Gasgenerator über die primäre Kammer (3, 10) zugeleitet wird;
eine dritte sekundäre Kammer (35) eine vierte Öffnung (A2) aufweist, durch die Gas aus dem Gasgenerator über die primäre Kammer (3, 10) zugeleitet wird;
wenn der Seitenvorhangairbag (1) ausgedehnt und ausgebildet ist, die primäre Kammer und sekundären Kammern (2 bis 10, 34, 35) so angeordnet sind, dass ein Abschnitt oder sämtliche der sekundären Kammern (2, 34, 35) und ein Abschnitt der primären Kammer (3 bis 10) einen gedachten Bandbereich (25, 28, 31) überdecken, der geneigt den Airbag (1) in einer Richtung vom ersten Befestigungsteil (19) nach oben in Richtung des zweiten Befestigungsteils (21) überquert, wobei der gedachte Bandbereich (25, 28, 31) geformt ist aus:
einer ersten gedachten Linie (23), die die jeweiligen Befestigungsenden (18a, 20a) von dem einen Satz Bänder (18, 20) verbindet, und einer zweiten gedachten Linie (24), die das jeweilige obere und/oder untere Ende des ersten und zweiten Befestigungsteils (19, 21) von dem einen Satz Bänder (18, 20) verbindet,
oder geformt ist aus einer ersten gedachten Linie (26), die ein oberes Ende (19b) des ersten Befestigungsteils (19) und ein oberes Ende (21 b) des zweiten Befestigungsteils (21) verbindet, und einer zweiten gedachten Linie (27), die ein unteres Ende (19a) des ersten Befestigungsteils (19) und ein unteres Ende (21a) des zweiten Befestigungsteils (21) verbindet,
oder geformt ist aus einer ersten gedachten Linie (29), die das obere Ende (19b) des ersten Befestigungsteils (19) mit dem Befestigungsende (20a) eines nach hinten verlaufenden Bands (20) verbindet, und einer zweiten gedachten Linie (30), die das untere Ende (19a) des ersten Befestigungsteils (19) und das untere Ende (21 a) des zweiten Befestigungsteils (21) verbindet; und
die erste sekundäre Kammer (2) vor oder hinter einem Füllteil der primären Kammer (3 bis 10) in einer Reihe in der Vorwärts- und Rückwärtsrichtung des Fahrzeugs angeordnet ist;
die zweite und dritte sekundäre Kammer (34, 35) innerhalb des nicht füllbaren Zwischenteils (13) angeordnet sind; und
die Größe der zweiten, dritten und vierten Öffnung (A, A1, A2) so gewählt sind, dass die Zeit, die notwendig ist, damit jede der sekundären Kammern (2, 34, 35) sich füllt, unterschiedlich ist, damit die Zugbeanspruchung des Airbags (1) gesteuert wird.

2. Seitenvorhangairbag (1) nach Anspruch 1, wobei die Größe der zweiten Öffnung (A) kleiner ist als die der ersten Öffnung (B), sodass die erste sekundäre Kammer (2) sich später ausdehnt als die primäre Kammer (3 bis 10).

3. Seitenvorhangairbag (1) nach Anspruch 1 oder 2, wobei
in einem Anfangsstadium eines Zusammenstoßes die primäre Kammer (3 bis 10) ausgedehnt und ausgebildet wird, in einem späteren Stadium des Zusammenstoßes das Gas kontinuierlich den sekundären Kammern (2, 34, 35) durch die zweiten Öffnungen (A, A1, A2) zugeleitet wird, mit dem Ergebnis, dass die sekundären Kammern (2, 34, 35) ausgedehnt werden, und
in dem späteren Stadium des Zusammenstoßes die sekundären Kammern (2, 34, 35) ausgedehnt und ausgebildet werden, sodass der Innendruck der primären Kammer (3 bis 10) gleich dem Innendruck der sekundären Kammern (2, 34, 35) wird.

4. Seitenvorhangairbag (1) nach Anspruch 3, wobei:
das Anfangsstadium des Zusammenstoßes eine Zeitdauer von 0 bis 100 Millisekunden nach Erkennen des Zusammenstoßes aufweist, und
das spätere Stadium des Zusammenstoßes eine Zeitdauer von 4 bis 6 Sekunden nach Erkennen des Zusammenstoßes aufweist.

5. Verfahren zum Formen eines Seitenvorhangairbags mit Kammern (2 bis 10, 24, 25), die von Gas ausgedehnt werden, das von einem Gasgenerator zugeleitet wird, wobei der Airbag so eingerichtet ist, dass er sich in Form eines Vorhangs an einem seitlichen Teil eines Fahrzeugs ausdehnt und ausbildet, damit Insassen des Fahrzeugs geschützt werden, wobei das Verfahren folgende Schritte umfasst:
Bereitstellen einer primären Kammer (3 bis 10), die sich ausdehnt, damit sie einen Insassen schützt, wobei die primäre Kammer (3 bis 10) eine erste Öffnung (B) aufweist, durch die Gas aus dem Gasgenerator zugeleitet wird, sodass die primäre Kammer (3 bis 10) durch das Einströmen von Gas ausgedehnt wird;
Bereitstellen von sekundären Kammern (2, 34, 35), die den Seitenvorhangairbag (1) auf Zug beanspruchen, wenn der Seitenvorhangairbag (1) ausgedehnt und ausgebildet ist, wobei eine erste sekundäre Kammer (2) eine zweite Öffnung (A) aufweist, durch die Gas aus dem Gasgenerator über einen Gaszuleitungskanal (11) zugeleitet wird, sodass die erste sekundäre Kammer (2) durch das Einströmen von Gas ausgedehnt wird, wobei eine zweite sekundäre Kammer (34) eine dritte Öffnung (A1) aufweist, durch die Gas aus dem Gasgenerator über die primäre Kammer zugeleitet wird, sodass die zweite sekundäre Kammer (34) durch das Einströmen von Gas ausgedehnt wird, und wobei eine dritte sekundäre Kammer (35) eine vierte Öffnung (A2) aufweist, durch die Gas aus dem Gasgenerator über die primäre Kammer zugeleitet wird, sodass die dritte sekundäre Kammer (35) durch das Einströmen von Gas ausgedehnt wird;
Bereitstellen eines vorderen nicht füllbaren Teils (12);
Bereitstellen eines hinteren nicht füllbaren Teils (14) mit einem Verlängerungsvorsprung (14a), der von dort aus verläuft;
Bereitstellen eines nicht füllbaren Zwischenteils (13);
Bereitstellen von einem Satz Bändern (18, 20), von denen bei jedem ein Ende an dem Seitenvorhangairbag (1) an einem jeweiligen ersten und zweiten Befestigungsteil (19, 21) befestigt ist und das andere Ende an einem Fahrzeug an einem Befestigungsende (18, 20) in der Vorwärts- und Rückwärtsrichtung des Fahrzeugs befestigt ist;
Anordnen des ersten Befestigungsteils (19) am vorderen nicht füllbaren Teil (12) und des zweiten Befestigungsteils (21) an dem Verlängerungsvorsprung (14a);
Einrichten des Airbags derart, dass wenn der Seitenvorhangairbag (1) ausgedehnt und ausgebildet ist, die primäre Kammer und sekundären Kammern (2 bis 10, 34, 35) so angeordnet sind, dass ein Abschnitt oder sämtliche der sekundären Kammern (2, 34, 35) und ein Abschnitt der primären Kammer (3 bis 10) einen gedachten Bandbereich (25, 28, 31) überdecken, der geneigt den Airbag (1) in einer Richtung vom ersten Befestigungsteil (19) nach oben in Richtung des zweiten Befestigungsteils (21) überquert, wobei der gedachte Bandbereich (25, 28, 31) geformt ist aus:
einer ersten gedachten Linie (23), die die jeweiligen Befestigungsenden (18a, 20a) von dem einen Satz Bänder (18, 20) verbindet, und einer zweiten gedachten Linie (24), die das jeweilige erste und/oder zweite Befestigungsteil (19, 21) von dem einen Satz Bänder (18, 20) verbindet,
oder geformt ist aus einer ersten gedachten Linie (26), die ein oberes Ende (19b) des ersten Befestigungsteils (19) und ein oberes Ende (21 b) des zweiten Befestigungsteils (21) verbindet, und einer zweiten gedachten Linie (27), die ein unteres Ende (19a) des ersten Befestigungsteils (19) und ein unteres Ende (21a) des zweiten Befestigungsteils (21) verbindet,
oder geformt ist aus einer ersten gedachten Linie (29), die das obere Ende (19b) des ersten Befestigungsteils (19) mit dem Befestigungsende (20a) eines nach hinten verlaufenden Bands (20) verbindet, und einer zweiten gedachten Linie (30), die das untere Ende (19a) des ersten Befestigungsteils (19) und das untere Ende (21 a) des zweiten Befestigungsteils (21) verbindet; und
Anordnen der ersten sekundären Kammer (2) vor oder hinter einem Füllteil der primären Kammer (3 bis 10) in einer Reihe in der Vorwärts- und Rückwärtsrichtung des Fahrzeugs;
Anordnen der zweiten und dritten sekundären Kammer (34, 35) innerhalb des nicht füllbaren Zwischenteils (13); und
Wählen der Größe der zweiten, dritten und vierten Öffnung (A, A1, A2) derart, dass die Zeit, die notwendig ist, damit jede der sekundären Kammern (2, 34, 35) sich füllt, unterschiedlich ist, damit die Zugbeanspruchung des Airbags (1) gesteuert wird.

## Revendications

1. Coussinet gonflable de protection sous forme de rideau latéral (1), qui comprend des compartiments (2-10, 34, 35) gonflés par du gaz alimenté depuis un gonfleur, et qui gonfle et se déploie dans une forme de rideau sur une partie latérale d'un véhicule de façon à protéger des occupants, le coussinet gonflable de protection sous forme de rideau latéral (1) comprenant :
un compartiment principal (3-10) qui gonfle de façon à protéger un occupant ;
des compartiments secondaires (2, 34, 35) qui appliquent une tension sur le coussinet gonflable de protection sous forme de rideau latéral (1) après que le coussinet gonflable de protection sous forme de rideau latéral (1) est gonflé et déployé ;
une partie de non gonflage avant (12) ;
une partie de non gonflage arrière (14) avec une saillie d'extension (14a) s'étendant depuis celle-ci ;
une partie de non gonflage intermédiaire (13) ; et
un ensemble de cordons (18, 20), chacun comportant une extrémité fixée au coussinet gonflable de protection sous forme de rideau latéral (1) sur des première et seconde parties de fixation (19, 21) respectives et l'autre extrémité fixée à un véhicule sur une extrémité de fixation (18, 20), dans la direction vers l'avant et vers l'arrière du véhicule,
dans lequel :
la première partie de fixation (19) est disposée sur la partie de non gonflage avant (12) et la seconde partie de fixation (21) est disposée sur la saillie d'extension (14a) ;
le compartiment principal (3-10) comporte une première ouverture (B) qui communique avec le passage d'alimentation de gaz (11), et est gonflé par l'afflux de gaz depuis le gonfleur ;
un premier compartiment secondaire (2) comporte une deuxième ouverture (A) à travers laquelle du gaz est alimenté depuis le gonfleur, et est gonflée par l'afflux de gaz depuis le passage d'alimentation de gaz (11) ou depuis le compartiment principal (3-10) ;
un deuxième compartiment secondaire (34) comporte une troisième ouverture (A1) à travers laquelle du gaz est alimenté depuis le gonfleur par le biais du compartiment principal (3, 10) ;
un troisième compartiment secondaire (35) comporte une quatrième ouverture (A2) à travers laquelle du gaz est alimenté depuis le gonfleur par le biais du compartiment principal (3, 10) ;
quand le coussinet gonflable de protection sous forme de rideau latéral (1) est gonflé et déployé, le compartiment principal et les compartiments secondaires (2-10, 34, 35) sont disposés de telle manière qu'une portion ou la totalité des compartiments secondaires (2, 34, 35) et une portion du compartiment principal (3-10) chevauchent une zone de bande virtuelle (25, 28, 31) qui traverse de manière inclinée le coussinet gonflable de protection (1) dans une direction partant de la première partie de fixation (19) vers le haut vers la seconde partie de fixation (21), dans lequel la zone de bande virtuelle (25, 28, 31) est formée par :
une première ligne virtuelle (23) qui relie les extrémités de fixation (18a, 20a) respectives de l'ensemble de cordons (18, 20) et une seconde ligne virtuelle (24) qui relie les extrémités supérieures et/ou inférieures respectives des première et seconde parties de fixation (19, 21) de l'ensemble de cordons (18, 20),
ou est formée par une première ligne virtuelle (26) qui relie une extrémité supérieure (19b) de la première partie de fixation (19) et une extrémité supérieure (21 b) de la seconde partie de fixation (21) et une seconde ligne virtuelle (27) qui relie une extrémité inférieure (19a) de la première partie de fixation (19) et une extrémité inférieure (21 a) de la seconde partie de fixation (21),
ou est formée par une première ligne virtuelle (29) qui relie l'extrémité supérieure (19b) de la première partie de fixation (19) à l'extrémité de fixation (20a) d'un cordon (20) s'étendant vers l'arrière et une seconde ligne virtuelle (30) qui relie l'extrémité inférieure (19a) de la première partie de fixation (19) et l'extrémité inférieure (21 a) de la seconde partie de fixation (21) ; et
le premier compartiment secondaire (2) est disposé devant ou derrière une partie de gonflage du compartiment principal (3-10), en ligne dans la direction vers l'avant et vers l'arrière du véhicule ;
le deuxième et le troisième compartiment secondaire (34, 35) sont disposés dans la partie de non gonflage intermédiaire (13) ; et
les tailles des deuxième, troisième et quatrième orifices (A, A1, A2) sont choisies de sorte que le temps requis pour chacun des compartiments secondaires (2, 34, 35) pour se gonfler est différent, afin de contrôler la tension appliquée sur le coussinet gonflable de protection (1).

2. Coussinet gonflable de protection sous forme de rideau latéral (1) selon la revendication 1, dans lequel la seconde ouverture (A) est de taille inférieure à la première ouverture (B) de sorte que le premier compartiment secondaire (2) gonfle plus tard que le compartiment principal (3-10).

3. Coussinet gonflable de protection sous forme de rideau latéral (1) selon l'une quelconque des revendications 1 ou 2, dans lequel
lors d'une phase initiale de collision, le compartiment principal (3-10) est gonflé et déployé, lors d'une phase ultérieure de la collision, le gaz est alimenté en continu dans les compartiments secondaires (2, 34, 35) à travers les secondes ouvertures (A, A1, A2), ce qui a pour résultat que les compartiments secondaires (2, 34, 35) sont gonflés, et
lors de la phase ultérieure de la collision, les compartiments secondaires (2, 34, 35) sont gonflés et déployés de sorte que la pression intérieure du compartiment principal (3-10) devient identique à la pression intérieure des compartiments secondaires (2, 34, 35).

4. Coussinet gonflable de protection sous forme de rideau latéral (1) selon la revendication 3, dans lequel :
la phase initiale de la collision présente une durée de 0 à 100 millisecondes après que la collision est détectée, et
la phase ultérieure de la collision présente une durée de 4 à 6 secondes après que la collision est détectée.

5. Procédé de formation d'un coussinet gonflable de protection sous forme de rideau latéral comportant des compartiments (2-10, 24, 25) gonflés par du gaz alimenté depuis un gonfleur, le coussinet gonflable de protection étant configuré pour gonfler et se déployer dans une forme de rideau sur une partie latérale d'un véhicule de façon à protéger des occupants du véhicule, le procédé comprenant les étapes consistant à :
mettre à disposition un compartiment principal (3-10) qui gonfle de façon à protéger un occupant, le compartiment principal (3-10) comportant une première ouverture (B) à travers laquelle du gaz est alimenté depuis le gonfleur, de sorte que le compartiment principal (3-10) est gonflé par l'afflux de gaz ;
mettre à disposition des compartiments secondaires (2, 34, 35) qui appliquent une tension sur le coussinet gonflable de protection sous forme de rideau latéral (1) quand le coussinet gonflable de protection sous forme de rideau latéral (1) est gonflé et déployé, un premier compartiment secondaire (2) comportant une seconde ouverture (A) à travers laquelle du gaz est alimenté depuis le gonfleur par le biais d'un passage d'alimentation de gaz (11), de sorte que le premier compartiment secondaire (2) est gonflé par l'afflux de gaz, un deuxième compartiment secondaire (34) comportant une troisième ouverture (A1) à travers laquelle du gaz est alimenté depuis le gonfleur par le biais du compartiment principal, de sorte que le deuxième compartiment secondaire (34) est gonflé par l'afflux de gaz, et un troisième compartiment secondaire (35) comportant une quatrième ouverture (A2) à travers laquelle du gaz est alimenté depuis le gonfleur par le biais du compartiment principal, de sorte que le troisième compartiment secondaire (35) est gonflé par l'afflux de gaz ;
mettre à disposition une partie de non gonflage avant (12) ;
mettre à disposition une partie de non gonflage arrière (14) comportant une saillie d'extension (14a) s'étendant depuis celle-ci ;
mettre à disposition une partie de non gonflage intermédiaire (13) ;
mettre à disposition un ensemble de cordons (18, 20), chacun comportant une extrémité fixée au coussinet gonflable de protection sous forme de rideau latéral (1) sur des première et seconde parties de fixation (19, 21) respectives et l'autre extrémité fixée à un véhicule sur une extrémité de fixation (18, 20), dans la direction vers l'avant et vers l'arrière du véhicule ;
disposer la première partie de fixation (19) sur la partie de non gonflage avant (12) et la seconde partie de fixation (21) sur la saillie d'extension (14a) ;
configurer le coussinet gonflable de protection de sorte que quand le coussinet gonflable de protection sous forme de rideau latéral (1) est gonflé et déployé, le compartiment principal et les compartiments secondaires (2-10, 34, 35) sont disposés de telle manière qu'une portion ou la totalité des compartiments secondaires (2, 34, 35) et une portion du compartiment principal (3-10) chevauchent une zone de bande virtuelle (25, 28, 31) qui traverse de manière inclinée le coussinet gonflable de protection (1) dans une direction partant de la première partie de fixation (19) vers le haut vers la seconde partie de fixation (21), dans lequel la zone de bande virtuelle (25, 28, 31) est formée par :
une première ligne virtuelle (23) qui relie les extrémités de fixation (18a, 20a) respectives de l'ensemble de cordons (18, 20) et une seconde ligne virtuelle (24) qui relie les première et/ou seconde parties de fixation (19, 21) respectives de l'ensemble de cordons (18, 20),
ou est formée par une première ligne virtuelle (26) qui relie une extrémité supérieure (19b) de la première partie de fixation (19) et une extrémité supérieure (21 b) de la seconde partie de fixation (21) et une seconde ligne virtuelle (27) qui relie une extrémité inférieure (19a) de la première partie de fixation (19) et une extrémité inférieure (21 a) de la seconde partie de fixation (21),
ou est formée par une première ligne virtuelle (29) qui relie l'extrémité supérieure (19b) de la première partie de fixation (19) à l'extrémité de fixation (20a) d'un cordon (20) s'étendant vers l'arrière et une seconde ligne virtuelle (30) qui relie l'extrémité inférieure (19a) de la première partie de fixation (19) et l'extrémité inférieure (21 a) de la seconde partie de fixation (21) ;
disposer le premier compartiment secondaire (2) devant ou derrière une partie de gonflage du compartiment principal (3-10), en ligne dans la direction vers l'avant et vers l'arrière du véhicule ;
disposer le deuxième et le troisième compartiment secondaire (34, 35) dans la partie de non gonflage intermédiaire (13) ; et
choisir les tailles des deuxième, troisième et quatrième orifices (A, A1, A2) de sorte que le temps requis pour chacun des compartiments secondaires (2, 34, 35) pour se gonfler est différent, afin de contrôler la tension appliquée sur le coussinet gonflable de protection (1).
